# EUROPEAN PATENT SPECIFICATION

(11) **EP 2 633 751 B1**
(45) Date of publication and mention of the grant of the patent: **21.01.2015**
(21) Application number: 13447005.3
(22) Date of filing: 22.02.2013
(51) Int. Cl.: A01G 9/14, A01D 46/24

(54) **Tube rail cart**
Rohrschienenwagen
Chariot pour tuyaux formant rails

(30) Priority: 28.02.2012 BE 201200115
(43) Date of publication of application: 04.09.2013
(73) Proprietor: B&A Automation BVBA, 2320 Hoogstraten (BE)
(72) Inventor: Bogaerts, Joris, 2960 Brecht (BE)
(74) Representative: Van hunsel, Lieven M.S.

(56) References cited:
- EP-A1- 1 359 084
- NL-C2- 1 026 577
- "De buis-railfiets", TUINDERIJ,, vol. 67, no. 7, 26 March 1987 (1987-03-26) , page 19, XP001252816,

## Description

The present invention concerns a tube rail cart.

In particular, the present invention concerns a tube rail cart designed to ride over tubes in a horticultural greenhouse, which tubes serve as rails, whereby the tube rail cart is provided with a platform on which a person can stand, with drive means for advancing the tube rail cart over the tubes and operating means with which a person can operate the drive means.

Such tube rail carts are already known according to the present state of the art and they are used in horticulture to move caretakers through the horticultural greenhouse, for example to check the growth of the plants in the greenhouse and to take care of the plants or to harvest plants or fruits and to convey these harvested plants or fruits.

In NL 1026577 a harvesting aid for picking fruits grown in greenhouse is described. The harvesting aid comprises a support frame, at least one work platform movable up and down first and second rails at either end of the frame for the person picking the fruits to stand on and a conveyor for transporting picked fruit from a harvesting position to a discharge position. The conveyor is accessible from a work platform positioned at a given height.

As a more basic alternative, also a tube rail bike as described in TUINDERIJ (volume 67, n°. 7, 26 Mach 1987) can be used.

In EP 1359084, a work trolley for use in greenhouses is described, the work trolley being provided with means for detecting an object, for instance a person, the detection means as a result of the detection action delivering a registration signal, and with means for driving the work trolley, as well as means for operating the drive means in response to the received registration signal.

The tubes, over which such tube rail carts ride, hereby consist of a pair of heating tubes which, just as the rails of a railway vehicle, run parallel through the greenhouse.

In the known tube rail carts, the drive means consist of an electric engine powered by a battery and the operating means generally consist of one or several switching means, for example of a switch that can be switched between moving forward and moving backward, a control knob for the variable speed control of the tube rail cart, an emergency stop switch and so on.

Sometimes a pedal is provided for controlling the driving speed which can be operated with a foot.

However, a disadvantage of the known tube rail carts is that it is often difficult to set the right driving speed. Indeed, while riding, the caretaker often has more work to do in certain places than in others, for example as the plants require more care in these places or as there is more to be harvested and the like.

When the driving speed of the tube rail cart is set, it may happen that, at certain moments, the caretaker cannot entirely keep up with the speed of the tube rail cart, and consequently, he will move more backward or more forward on the platform depending on the direction in which the tube rail cart is riding, as the tube rail cart rides forward or backward respectively.

In extreme cases, the driving speed of the tube rail cart will have to be adjusted by manually putting said control knob of the operating means in another position; or by pressing a pedal more or less with a foot, which is laborious, however, in combination with the manual work to be done on the plants.

Also, the present invention aims to remedy the above-mentioned disadvantage of the known tube rail carts and possibly also other disadvantages.

To this end, the invention concerns a tube rail cart designed to ride over tubes in a horticultural greenhouse, which tubes serve as rails, whereby the tube rail cart is provided with a platform on which a person can stand, with drive means for advancing the tube rail cart over the tubes and with operating means with which a person can operate the drive means and whereby the tube rail cart is additionally provided with one or several detectors generating a signal which may vary depending on the position of the person on the platform, and with a control which automatically controls the drive means on the basis of one or several signals generated by one or several of the aforesaid detectors.

A major advantage of such a tube rail cart is that the detector and/or detectors generate(s) another signal as a function of the position of the caretaker on the platform, which signal or signals can be used by the control to adjust the driving speed of the tube rail cart in an appropriate manner.

For example, such a detector may monitor a certain limit position on the platform and, as soon as the caretaker exceeds this limit position, generate a signal, for example an electric signal, which puts the control in another mode so as to set the drive means into a higher or lower speed, depending on the case.

In other words, the control of the tube rail may be such that, while the tube rail cart is riding, when the person on the platform moves somewhat in relation to the driving direction, i.e. in a sense opposite to the sense in which the tube rail cart is riding, the drive means will be set to a lower speed.

Alternatively or in combination therewith, the control of the tube rail cart may be such that, while the tube rail cart is riding, when the person on the platform moves somewhat in relation to the driving direction, i.e. in the same sense as the sense in which the tube rail cart is riding, the drive means will be set to a higher speed.

In another embodiment, such a detector may for example continuously measure the distance to a person on the platform and continuously control the control.

According to a preferred embodiment of a tube rail cart according to the invention, the control is such that, while the tube rail cart is riding, when the person on the platform moves somewhat in relation to the driving direction, i.e. in a sense opposite to the sense in which the tube rail cart is riding, the drive means will be set to a lower speed and possibly vice versa.

Such an embodiment of a tube rail cart according to the invention solves the problem mentioned in the introduction which arises when a caretaker can no longer keep up with the tube rail cart while working, as this tube rail cart is riding at too high a speed for him to be able to perform the tasks to fulfil.

By detecting the position of the caretaker and by adjusting the speed as a function of his position, with a tube rail cart according to the invention a caretaker can just keep on working without any additional concerns about driving the tube rail cart.

In order to better explain the characteristics of the invention, the following preferred embodiment of a tube rail cart, in particular a leaf cutter cart, according to the invention is described by way of example only without being limitative in any way, with reference to the accompanying figures in which:
figure 1 shows a tube rail cart according to the invention, seen in perspective;
figure 2 shows a top plan view according to arrow F2 on the tube rail cart from figure 1;
figure 3 shows a top plan view according to arrow F3 on the tube rail cart from figure 1; and,
figure 4 shows a front view according to arrow F4 on the tube rail cart from figure 1.

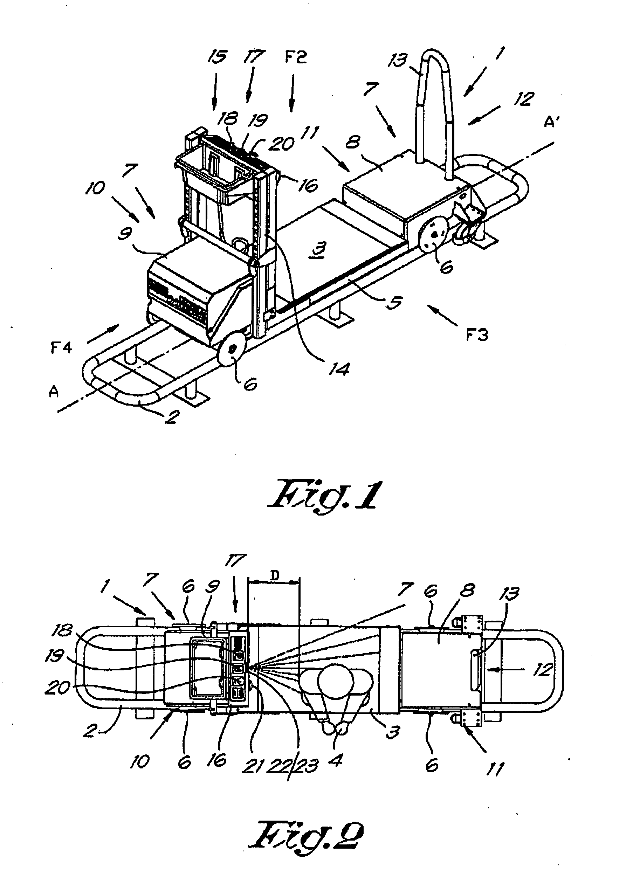

The tube rail cart 1 represented in figures 1 to 4 is, as the name indicates, a cart designed to ride over tubes 2, more specifically over the tubes 2 in a horticultural greenhouse.

Said tubes 2 are usually a pair of heating tubes 2, provided parallel to one another, and which thus serve as rails for the tube rail cart 1.

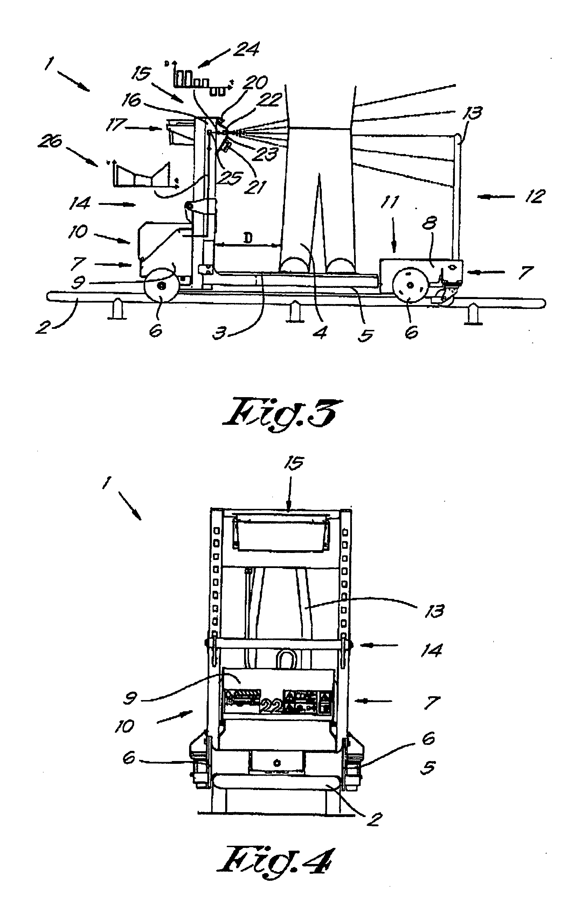

In the example shown, the tube rail cart 1 is made as a leaf cutter cart 1 designed to be used at low height, whereby the leaf cutter cart 1 is provided with a platform 3 which serves as a small work platform 3 for a person 4 (only represented schematically in figures 2 and 3) who has to carry out certain operations in the horticultural greenhouse, such as cutting leaves or harvesting plants or fruits, and whereby the platform 3 is located at only a small height above the tubes 2.

The platform 3 of the leaf cutter cart 1 is provided on a metal frame 5, which frame 5 rests on the tubes 2 with the aid of wheels 6 or rollers 6.

In order to drive these rollers or wheels 6, the leaf cutter cart 1 is also provided with drive means 7, which are formed of an electric engine 8 that is powered by a battery 9 and whereby these drive means 7 are integrated into a raised front part 10 and a raised rear part 11, separated from one another by the low platform 3.

The raised rear part 11 is, just as the platform 3, also made flat, such that a person may possibly also stand on this raised rear part 11.

In order to minimize the risk of a person falling from the leaf cutter cart 1, a vertically extending support or rail 13 is further provided on the extreme rear end 12 of the leaf cutter cart 1, on the raised rear part 11.

The raised front part 10 of the leaf cutter cart 1 is not designed to stand on and, adjacent to the platform 3, it is provided with a standing frame 14 in which an operating panel 16 is mounted on the top side 15 with manual operating means 17 with which a person can operate the drive means 7.

In the example as shown, these manual operating means 17 comprise a switch 18 to set the riding direction, either forward or backward; a control knob 19 for the variable speed control of the leaf cutter cart 1, and an emergency stop 20.

On the operating panel 16 is also provided an electrical connection 21 for charging the battery 9.

Naturally, an embodiment with all the above-mentioned characteristics is merely one of the many possibilities and, according to the invention, it is by no means excluded to make the actual configuration of the leaf cutter cart 1 entirely different.

Characteristic of the invention is that the leaf cutter cart 1 is additionally provided with a detector 22, more specifically in this case merely one detector 22, but there may also be several according to the invention, whereby this detector 22 is also integrated in the operating panel 16 in the given example, which is schematically represented by means of a square in the top view and the side view of figures 2 and 3.

Said detector 22 is a distance sensor 22 directed towards the platform 3 and with which the distance D, measured more or less according to the driving direction AA', between the person 4 on the platform 3 and a fixed point 23 on the leaf cutter cart 1 at the location of the detector 22, can be detected without contact.

As a function of the measured distance D, the detector 22 generates an electric signal 24, for example a digital signal 24, which is used as an input signal 24 for a control 25 which automatically controls the drive means 7 and which is also integrated in the operating panel 16. The control 25 may for example consist of an electronic controller 25 which converts the input signal coming from the detector 22 in a control signal 26, for example an analogue voltage control signal 26 which is fit to control the drive means 7, such that the required speed change of the leaf cutter cart 1 is obtained.

The control 25 may for example generate a control signal 26 which proportionally adjusts the speed of the tube rail cart 1 as a function of the distance D measured by the telemeter 22.

Preferably, the adjustment of the driving speed of the leaf cutter cart 1 is inversely proportional to the measured distance D, but also non-linear relationships between the measured distance D and the required speed change V can be applied.

The above-mentioned distance sensor 22 may for example continuously activate the control 25, but also another approach is conceivable whereby the control is activated discontinuously, for example each time a certain limit of the distance D is exceeded or the like.

The control is preferably such that, while the leaf cutter cart 1 is riding, when the person 4 on the platform 3 moves somewhat in relation to the driving direction AA', i.e. in a sense opposite to the sense in which the leaf cutter cart 1 is riding, the drive means 7 will be set to a lower speed.

In this manner is obtained an automatic speed control of the leaf cutter cart 1, whereby the leaf cutter cart 1 is set to a lower speed when the person 4 on the leaf cutter cart 1 moves against the driving direction on the platform 3 because a lot of work is required on the plants which he passes by.

Depending on the leaf cutter cart 1 running forward or backward, the person 4 will move backward, forward respectively on the platform 3 when he has too much work to do, such that the control 25 must react differently in either situation.

Optionally, there may additionally be ensured that the control 25 is such that, while the leaf cutter cart 1 is riding, when the person 4 on the platform 3 moves somewhat in relation to the driving direction AA', however in the same sense as the sense in which the leaf cutter cart 1 is riding, the drive means 7 will be set to a higher speed. This will, of course, result in the reverse effect, i.e. the driving speed of the leaf cutter cart 1 will be increased by the control 25 when the person 4 on the platform 3 seems able to cope easily with the work required on the plants along which he is riding.

Naturally, all kinds of steering systems are possible according to the invention.

For example, as an alternative, the leaf cutter cart or tube rail cart 1 can be equipped with at least two detectors, each in the shape of a sensor which detects a linear beam of rays being broken, i.e. a front sensor whose beam of rays concerned extends over the platform 3 transversely to the driving direction AA' near the front side of the leaf cutter cart or tube rail cart 1, and a rear sensor respectively whose beam of rays concerned extends over the platform 3 transversely to the driving direction A' near the rear side of the leaf cutter cart or tube rail cart 1.

Said two sensors may be for example light sensors which detect the interruption of a light ray beam.

Of course, it is the intention that the control 25 in such an embodiment of a tube rail cart 1 according to the invention is activated each time one of the above-mentioned sensors detects an interruption of the beam of rays concerned, i.e. in a discontinuous manner.

When the tube rail cart 1 is riding forward, the control 25 may for example limit the driving speed of the tube rail cart 1 when the rear sensor detects that the rear beam of rays is being interrupted by the person 4 on the tube rail cart 1 passing, and the control 25 may for example increase the driving speed of the tube rail cart 1 again when the front sensor detects such an interruption of the front beam of rays concerned.

The position of the switch 18 determines whether the tube rail cart 1 will ride forward or backward, and this position of the switch 18 can easily be coupled to the control 25 as well, such that the control 25 can be reversed when the position of said switch 18 is changed, such that the desired effect on the driving speed of the tube rail cart 1 can always be obtained.

In yet another embodiment of a tube rail cart 1 according to the invention, one or several detectors are provided on the platform 3 on which the person 4 is standing, for example pressure sensors which are able to detect the pressure caused by the weight of the person 4 on the platform 3.

A pressure-sensitive mat may hereby be provided on the platform 3 for example.

Alternatively, the platform 3 can be equipped with a floor plate which is centrally, or possibly in another position, provided with a hinge rod.

In such an embodiment there may be ensured for example that when the person 4 moves over the platform 3, thereby transgressing the hinge rod, the floor plate undergoes a certain bend, whereby as the plate bends, a detector or pressure sensor or the like can be activated, such that the drive means 7 can be set again to change the driving speed of the tube rail cart 1 as a function of the position of the person 4 on the platform 3.

In yet another embodiment, there may also be used detectors in the shape of one or several pressure sensors, mechanical contacts, push buttons or the like provided on a rail 13 of the tube rail cart 1, and which can be pressed or activated by the person 4 on the platform 3, for example by leaning with his body against the rail 13. Alternatively, the rail 13 itself can be made pressure-sensitive, for example by providing the rail 13 with a pressure-sensitive rod.

Thus, again as a function of the position of the person 4 on the platform 3, a signal 24 can be created which is designed to control the drive means 7 via the control 25.

In figures 1 to 4 as shown, the tube rail cart 1 is always a leaf cutter cart 1, but other embodiments of tube rail carts 1, intended to also be able to work at higher altitudes, are not excluded.

To this end, the tube rail cart 1 may for example be provided with a scissor raising platform with a work platform which is adjustable in height, optionally with a safety device in the shape of an inclination detector.

Although the discussion already mentions a tube rail cart, it is clear that the present invention also concerns trolleys or the like provided on wheels or caterpillars or the like, and provided with a platform on which a person can stand, and with drive means for moving the trolley, for example over sand or a surfacing, and with operating means with which a person can operate the drive means, whereby the trolley is additionally provided with one or several detectors generating a signal which may vary depending on the position of the person on the platform, and with a control which automatically controls the drive means on the basis of one or several signals generated by one or several of the above-mentioned detectors.

Such a trolley on tyres or caterpillars or the like may also have all the other characteristics as described and/or as mentioned in the dependent claims, save for the characteristics which are specifically adapted to the application on tube rails.

## Claims

1. Tube rail cart (1) designed to ride over tubes (2) in a horticultural greenhouse, which tubes (2) serve as rails, whereby the tube rail cart (1) is provided with a platform (3) on which a person (4) can stand, with drive means (7) for advancing the tube rail cart (1) over the tubes (2) and with operating means (17) with which the person (4) can operate the drive means (7), **characterised in that** the tube rail cart (1) is additionally provided with one or several detectors (22) generating a signal (24) which may vary depending on the position of the person (4) on the platform (3) and with a control (25) which automatically controls the drive means (7) on the basis of one or several signals (24) generated by one or several of the above-mentioned detectors (22).

2. Tube rail cart (1) according to claim 1, **characterised in that** the tube rail cart (1) comprises at least two detectors (22), each in the shape of a sensor which detects a linear beam of rays being broken, i.e. a front sensor whose beam of rays concerned extends over the platform (3) transversely to the driving direction (AA') near the front side of the tube rail cart (1), and a rear sensor respectively, whose beam of rays concerned extends over the platform (3) transversely to the driving direction (AA') near the rear side of the tube rail cart (1).

3. Tube rail cart (1) according to claim 2, **characterised in that** the aforesaid two sensors are light sensors detecting the interruption of a light ray bundle.

4. Tube rail cart (1) according to claim 2 or 3, **characterised in that** the control (25) is activated discontinuously, more specifically each time one of the above-mentioned sensors detects an interruption of the beam of rays concerned.

5. Tube rail cart (1) according to claim 1, **characterised in that** the tube rail cart (1) is provided with at least one detector (22) in the shape of a distance sensor (22), with which the distance (D) between a person (4) on the platform (3) and a fixed point (22) on the tube rail cart (1) at the location of the detector (22) can be detected without contact.

6. Tube rail cart (1) according to claim 5, **characterised in that** the above-mentioned distance sensor (22) continuously activates the control (25).

7. Tube rail cart (1) according to claim 6, **characterised in that** the control (25) adjusts the speed of the tube rail cart (1) inversely proportional to the distance (D) measured by the distance sensor (22).

8. Tube rail cart (1) according to any one of the preceding claims, **characterised in that** the tube rail cart (1) is a leaf cutter cart (1).

9. Tube rail cart (1) according to any one of the preceding claims, **characterised in that** the tube rail cart (1) is provided with a scissor raising platform with a work platform which is adjustable in height.

## Patentansprüche

1. Röhrenschienenwagen (1), konzipiert zum Fahren über Röhren (2), die in einem Gärtnereigewächshaus als schienen dienen, wobei der Röhrenschienenwagen (1) mit einer Plattform (3) versehen ist, auf der eine Person (4) stehen kann, mit Antriebsmitteln (7) zum Fortbewegen des Röhrenschienenwagens (1) über die Röhren (2) und mit Bedienungsmitteln (17), mit denen die Person (4) die Antriebsmittel (7) bedienen kann, **dadurch gekennzeichnet, dass** der Röhrenschienenwagen (1) zusätzlich mit einem oder mehreren Detektoren (22) versehen ist, die ein Signal (24) erzeugen, das abhängig von der Position der Person (4) auf der Plattform (3) variieren kann, und mit einer Steuerung (25), die automatisch die Antriebsmittel (7) anhand von einem oder mehreren Signalen (249, erzeugt von einem oder mehreren der oben genannten Detektoren (22) steuert.

2. Röhrenschienenwagen (1) nach Anspruch 1, **dadurch gekennzeichnet, dass** der Röhrenschienenwagen (1) mindestens zwei Detektoren (22) umfasst, jeweils in Form eines Sensors, der ein lineare durchbrochenes Strahlenbündel detektiert, d. h., einen vorderen Sensor, dessen betroffenes Strahlenbündel über die Plattform (3) quer zur Antriebsrichtung (AA') nahe der Vorderseite des Röhrenschienenwagens (1) bzw. einen hinteren Sensor, dessen betroffenes Strahlenbündel über die Plattform (3) quer zur Antriebsrichtung (AA') nahe der hinteren Seite des Röhrenschienenwagens (1) verläuft.

3. Röhrenschienenwagen (1) nach Anspruch 2, **dadurch gekennzeichnet, dass** die oben genannten zwei Sensoren Lichtsensoren sind, die die Unterbrechung eines Lichtstrahlbündels detektieren.

4. Röhrenschienenwagen (1) nach Anspruch 2 oder 3, **dadurch gekennzeichnet, dass** die Steuerung (25) unterbrochen aktiviert wird, sooft einer der oben genannten Sensoren eine Unterbrechung des betreffenden Lichtstrahlbündels detektiert.

5. Röhrenschienenwagen (1) nach Anspruch 1, **dadurch gekennzeichnet, dass** der Röhrenschienenwagen (1) mit mindestens einem Detektor (22) in Form eines Distanzsensors (22) versehen ist, mit dem die Distanz (D) zwischen einer Person (4) auf der Plattform (3) und einem Fixpunkt (22) auf dem Röhrenschienenwagen (1) am Standort des Detektors (22) ohne Kontakt detektiert werden kann.

6. Röhrenschienenwagen (1) nach Anspruch 5, **dadurch gekennzeichnet, dass** der oben genannte Distanzsensor (22) die Steuerung (25) kontinuierlich aktiviert.

7. Röhrenschienenwagen (1) nach Anspruch 6, **dadurch gekennzeichnet, dass** die Steuerung (25) die Geschwindigkeit des Röhrenschienenwagens (1) umgekehrt proportional zu der vom Distanzsensor (22) gemessenen Distanz (D) anpasst.

8. Röhrenschienenwagen (1) nach einem der vorhergehenden Ansprüche, **dadurch gekennzeichnet, dass** der Röhrenschienenwagen (1) ein Blattschneidewagen (1) ist.

9. Röhrenschienenwagen (1) nach einem der vorhergehenden Ansprüche, **dadurch gekennzeichnet, dass** der Röhrenschienenwagen (1) mit einer Scherenhebeplattform mit einer höhenverstellbaren Arbeitsplattform versehen ist.

## Revendications

1. Chariot pour rails tubulaires (1) destiné à circuler sur des tubes (2) dans une serre d'horticulture, lesdits tubes (2) servant de rails, sur lequel le chariot pour rails tubulaires (1) est muni d'une plateforme (3) sur laquelle une personne (4) peut se tenir debout, avec des moyens d'entraînement (7) pour faire avancer le chariot pour rails tubulaires (1) sur les tubes (2) et avec des moyens de commande (17) à l'aide desquels la personne (4) peut actionner les moyens d'entraînement (7), **caractérisé en ce que** le chariot pour rails tubulaires (1) est en outre équipé d'un ou de plusieurs détecteurs (22) générant un signal (24) qui peut varier en fonction de la position de la personne (4) sur la plateforme (3) et d'un dispositif de commande (25) qui commande automatiquement les moyens d'entraînement (7) sur la base d'un ou de plusieurs signaux (24) générés par un ou plusieurs des détecteur précités (22).

2. Chariot pour rails tubulaires (1) selon la revendication 1, **caractérisé en ce que** le chariot pour rails tubulaires (1) comprend au moins deux détecteurs (22), chacun sous la forme d'un capteur qui détecte la rupture d'un faisceau linéaire de rayons, à savoir respectivement un capteur avant dont le faisceau de rayons concerné s'étend sur la plateforme (3) transversalement par rapport à la direction d'avancement (AA') à proximité de l'avant du chariot pour rails tubulaires (1), et un capteur arrière, dont le faisceau de rayons concerné s'étend sur la plateforme (3) transversalement par rapport à la direction d'avancement (AA') à proximité de l'arrière du chariot pour rails tubulaires (1).

3. Chariot pour rails tubulaires (1) selon la revendication 2, **caractérisé en ce que** lesdits deux capteurs précités sont des capteurs de lumière détectant l'interruption d'un faisceau de rayons lumineux.

4. Chariot pour rails tubulaires (1) selon la revendication 2 ou 3, **caractérisé en ce que** le dispositif de commande (25) est activé de manière discontinue, plus particulièrement chaque fois que l'un des deux capteurs précités détecte une interruption du faisceau de rayons lumineux concerné.

5. Chariot pour rails tubulaires (1) selon la revendication 1, **caractérisé en ce que** le chariot pour rails tubulaires (1) est muni d'au moins un détecteur (22) sous la forme d'un capteur de distance (22), à l'aide duquel la distance (D) entre une personne (4) sur la plateforme (3) et un point fixe (22) sur le chariot pour rails tubulaires (1) à l'endroit du détecteur (22) peut être détectée sans contact.

6. Chariot pour rails tubulaires (1) selon la revendication 5, **caractérisé en ce que** le capteur de distance précité (22) active le dispositif de commande (25) de manière continue.

7. Chariot pour rails tubulaires (1) selon la revendication 6, **caractérisé en ce que** le dispositif de commande (25) adapte la vitesse du chariot pour rails tubulaires (1) de manière inversement proportionnelle à la distance (D) mesurée par le capteur de distance (22).

8. Chariot pour rails tubulaires (1) selon l'une quelconque des revendications précédentes, **caractérisé en ce que** le chariot pour rails tubulaires (1) est un chariot servant à couper les feuilles (1).

9. Chariot pour rails tubulaires (1) selon l'une quelconque des revendications précédentes, **caractérisé en ce que** le chariot pour rails tubulaires (1) est muni d'une plateforme élévatrice à ciseaux réglable en hauteur équipée d'une plateforme de travail.
